# EUROPEAN PATENT APPLICATION

(11) **EP 1 890 409 A2**
(43) Date of publication of application: **20.02.2008**
(21) Application number: 07114518.9
(22) Date of filing: 17.08.2007
(51) Int. Cl.: H04H 1/00

(54) **System and method for optimizing transmission of ESG data in DVB-H system**

(30) Priority: 19.08.2006 KR 20060078484
(71) Applicant: Samsung Electronics Co., Ltd., Suwon-si Gyeonggi-do (KR)
(72) Inventor: Jeon, Jin-Woo, Gyeonggi-do (KR); Han, Young-Seop, Gyeonggi-do (KR); Kim, Young-Jip, Gyeonggi-do (KR)
(74) Representative: Grünecker, Kinkeldey, Stockmair & Schwanhäusser Anwaltssozietät

(57) **Abstract**

Disclosed is a system and a method for efficiently dividing a session into several sessions to forward the classified sessions during the transmission of ESG data in a DVB-H broadcasting service. For this, when there is a large amount of the ESG data, sessions during which an actual ESG data is carried are assigned suitable roles needed to perform a broadcasting service, and are then forwarded. On this, a variation of important information of a channel is specified as a reconfiguration session, which is then able to be transmitted. A terminal receives the reconfiguration session to acquire information to be varied, and previously prepares for the variation of the service. With this, since the terminal can gain access to a required ESG data session optionally as occasion demands, the effectiveness of a data receiving scheme of the terminal is greatly improved and service interruption is minimized.

## Description

The present invention relates to a Digital Video Broadcasting-Handheld (DVB-H) system, and more particularly to a system and a method for efficiently dividing a session into several sessions to forward the classified sessions during the transmission of Electronic Service Guide (ESG) data in the DVB-H system.

DVB-H implies technical standards which have been established for the purpose of improving the ability to receive Digital TeleVision (DTV) during motion, and the letter 'H' represents 'Handheld.' The standards support mobile multimedia broadcasting, which provides high quality audio and image services anytime and anywhere, even while driving or walking.

A service model using this DVB-H has the following configuration. Above all, a sending side is configured with a network through which common carriers and broadcasters interact with one another according to standards of the Digital Video Broadcasting-Universal Mobile Telecommunications System (DVB-UMTS). The broadcasters deliver compressed data to a terminal in a transmission scheme of DVB-H on the basis of standards of Digital Video Broadcasting-Advanced Video Coding (DVB-AVC). Then, the terminal communicates with the common carriers according to communication standards such as the Digital Video Broadcasting-Universal Mobile Telecommunications System/Global System for Mobile communication (DVB-UMTS/GSM), and is now able to deliver information on the receiving-side to the broadcasters in real time via a communication network.

On the other hand, most of information pertinent to broadcasting is included in an Electronic Service Guide (ESG) in DVB-H, with which a user can choose an interesting TV or radio channel or an item to download. In addition, the ESG provides information allowing the terminal to be able to be connected with a specified Internet Protocol (IP) stream included in the DVB-H transport stream. The whole process of managing the ESG is specifically classified into three processes of a first process of bootstrapping the ESG, a second process of acquiring the ESG, and a third process of updating the ESG.

The first process causes a terminal to perceive what kinds of ESGs the terminal can receive and how these ESGs are obtained. The second process causes the terminal to gather the ESG information and to manage the gathered ESG information. The third process causes the terminal to restore the ESG information having the latest version.

The standards of DVB-H ESG support a mode of a single stream (hereinafter, referred to as "a single stream mode") and a mode of multiple streams (hereinafter, referred to as "a multiple stream mode") in the transmission of the ESG data. However, since there are no detailed guidelines on a division of each session or rules of partitioning in a case of the multiple streams, it frequently occurs that the transmission of the ESG data inefficiently progresses. Specially, as the amount of data grows, the data processing time increases and a need exists for establishment of rules of partitioning.

Besides, when a DVB-H service is provided in a usual manner, if important data (e.g., Service Discovery Protocol (SDP) of a channel, etc.) required for viewing and hearing changes, such a situation where viewing and hearing is stopped until an update of the terminal will be completed, the change happens in a conventional manner.

As described above, a variety of expansions, such as a characteristic of a session and division of role through a later multiple stream mode, etc., can come into existence. In this case, the necessity that the rules of partitioning by each session must be newly applied is increasing. With the configuration of present standards, it is problematic that the rules are not variously applied to each session but can be only uniformly applied to each session. It becomes a highly important structural problem afterwards, and can hinder a functional extension.

What's more, because a terminal must newly analyze channel information if the channel information changes during a Digital Video Broadcasting-Handheld (DVB-H) broadcasting service, it is inevitable that service interruption will occur. However, it is highly inconvenient that, with occurrence of the service interruption, the user must wait in an idle mode until the DVB-H broadcasting service restarts.

Accordingly, the present invention has been made to solve the above problems occurring in conventional systems, and it is the object of the present invention to provide a system and a method for efficiently dividing a session into several sessions to forward the classified sessions during the transmission of Electronic Service Guide (ESG) data in order to optimize the transmission of the ESG data in the DVB-H system.

This object is solved by the subject matter of the independent claims.

Preferred embodiments are defined in the dependent claims.

Furthermore, it is another aspect of the present invention to provide a system for optimizing the transmission of ESG data in a DVB-H system, which is able to promote improvement of service quality of DVB-H broadcasting, and which minimizes service interruption even though import information of a channel, on which viewers presently watch and listen to a program, changes.

In order to accomplish the above, there is provided a method for optimizing the transmission of Electronic Service Guide (ESG) data in a Digital Video Broadcasting-Handheld (DVB-H) system according to the present invention, including steps of transmitting the ESG data, in which a session type denoting a role of each session by ESG data sessions is set, from a DVB-H service provider to a terminal; detecting by the terminal each session type set in the ESG data; and discriminating between the ESG data sessions on the basis of the detected session type, and classifying the ESG data sessions according to the types thereof by the terminal.

In order to accomplish the above, there is provided a system for optimizing the transmission of Electric Service Guide (ESG) data in a Digital Video Broadcasting-Handheld (DVB-H) system according to the present invention, including a DVB-H service provider transmitting to a terminal the ESG data in which a session type denoting a role of each session by ESG data sessions is set; and the terminal for detecting each session type set in the ESG data, for discriminating between the ESG data sessions on the basis of the detected session type, and for classifying the ESG data sessions by the types thereof.

The present invention will be more apparent from the following detailed description taken in conjunction with the accompanying drawings, in which:
FIG. 1 illustrates a transmission mode of an ESG single stream according to a preferred embodiment of the present invention;
FIG. 2 illustrates a transmission mode of ESG multiple streams according to a preferred embodiment of the present invention;
FIG. 3 illustrates a session which is classified into several sessions and then transferred by roles in accordance with the rules of ESG partitioning according to a first embodiment of the present invention;
FIG. 4 illustrates a session which is reconstructed by the rules of ESG partitioning according to another embodiment of the present invention;
FIG. 5 is a flowchart illustrating an operation of generation and transfer of sessions respectively assigned suitable roles according to a preferred embodiment of the present invention;
FIG. 6 is a flowchart illustrating an operation of a terminal by a new rule of a partition declaration according to a preferred embodiment of the present invention; and
FIG. 7 illustrates a syntax defined in the partition declaration according to a preferred embodiment of the present invention.

Hereinafter, preferred embodiments of the present invention are described with reference to the accompanying drawings. The same elements will be designated by the same reference numerals in the following description and drawings although they are shown in different drawings. In the following description of the present invention, a detailed description of known functions and configurations incorporated herein will be omitted when it may make the subject matter of the present invention rather unclear.

According to the present invention, a system and a method are provided for efficiently classifying several sessions into various types according to their roles to forward the classified sessions during the transmission of ESG data in a DVB-H broadcasting service. For this, when there is a large amount of the ESG data, sessions during which an actual ESG data is carried are assigned suitable roles needed to perform a broadcasting service and are then forwarded. On this, a variation of important information of a channel is specified as a reconfiguration session, which is then able to be transmitted. A terminal receives the reconfiguration session to acquire information to be varied, and previously prepares for the variation of the service. With this, since the terminal can gain access to a required ESG data session optionally as occasion demands, the effectiveness of a data receiving scheme of the terminal is improved in great measure, and can minimize interruption of the service.

To efficiently describe of the present invention, a transmission scheme of the ESG in the DVB-H is first described, and formats of notification messages and an operation of a system corresponding to the formats, are then described afterwards.

First, a terminal is to acquire information essentially required to receive a service provided by a service provider by receiving an ESG stream. When a user has selected a specified service, by using the acquired information, the terminal gains access to a data stream transmitted so as to provide the service, and then receives data. The information required for the terminal to get access to the data stream is transmitted by use of ESG fragments.

According to the ESG data model, fragments of the ESG data are grouped several fragments by several fragments into one fragment set and are then included in one container, which is considered and transmitted as one object during a flute session.

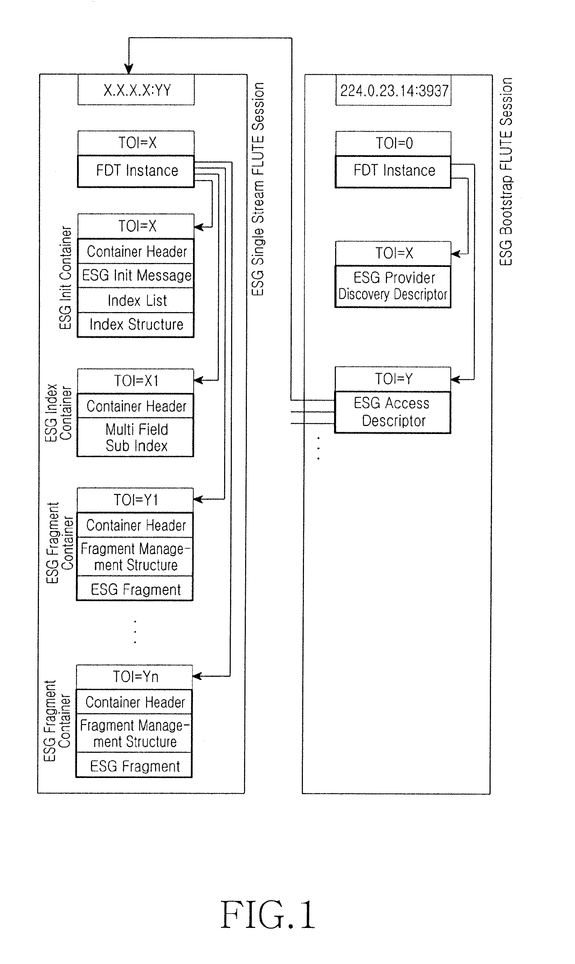

A first description is presented in a mode of ESG single stream transport. ESG containers are transmitted during a same flute session as illustrated in FIG. 1. This session can be retrieved through an ESG access descriptor forwarded from an ESG bootstrap session.

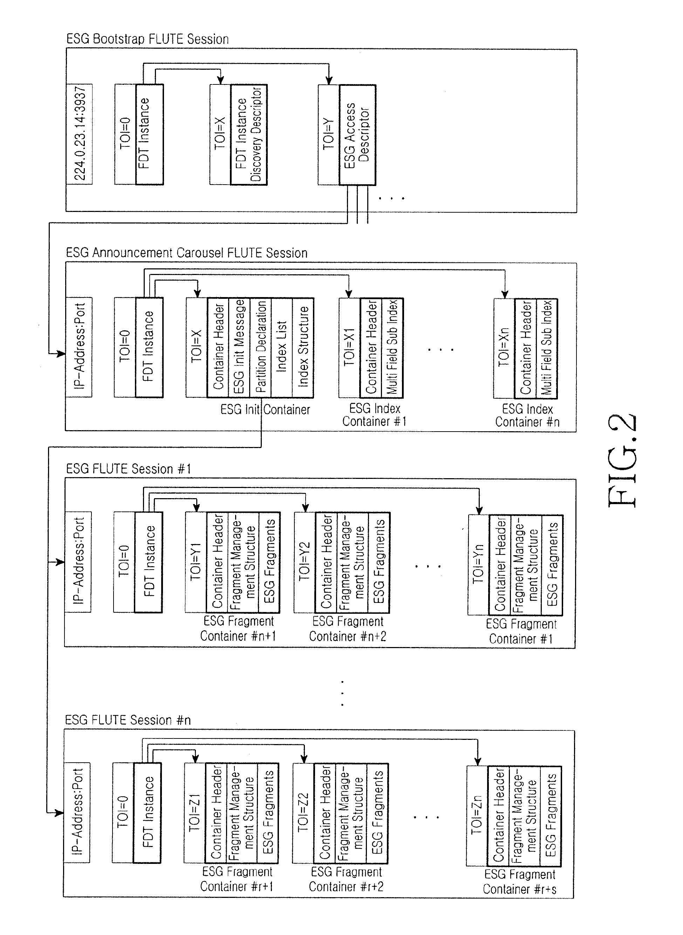

On the other hand, in a mode of ESG multiple stream transport, ESG containers are transmitted during sessions, which are more than three, as illustrated in FIG. 2. During an ESG bootstrap session, an ESG announcement carousel flute session is specified, and during the ESG announcement carousel flute session, the number of sessions, during which the actual ESG containers are transmitted, and information on the sessions, are perceived.

Referring to FIG. 2, the service provider informs the terminal of information on a channel ("channel information") of the ESG bootstrap session, i.e., a path, so as to transmit the ESG. Then, if the terminal is connected with the channel according to the channel information, the terminal receives bootstrap information, which includes an ESG provider descriptor and an ESG access descriptor. Through the ESG provider descriptor, information on an ID, a name, a logo, etc. related to the ESG provider are forwarded, and, through the ESG access descriptor, information on an announcement carousel of the ESG, information on the number of each IP session and information on the address during which the ESG is transferred are forwarded.

During the announcement carousel of the ESG, an ESG init container and index containers of the ESG are forwarded. The ESG init container includes an option of a decoder for deciphering the ESG, a partition declaration, an index list, and an index structure. The partition declaration includes information on a division reference by each session and on a channel of each session, in a case where the ESG is transferred during multiple sessions. The index list and the index structure include fragments of the ESG to be forwarded, as well as information on mapping between containers. The ESG flute session illustrated in FIGS. 1 and 2 signifies an ESG data session.

The ESG is included in a container, and is then forwarded with the container. Each container includes a fragment management structure denoting information on fragments configuring the container and the ESG fragments.

This data model of the ESG includes a service fragment, a schedule fragment, a contents fragment, an acquisition fragment, a service bundle fragment, a purchase fragment and a purchase channel fragment. The ESG has information on a broadcasting service, and is forwarded to the terminal by use of a separate Internet Protocol (IP) stream at a separate time from an actual data stream. Hence, it is possible that the service provider offers user information, which the user must have perceived before receiving a service, by using an ESG model before providing the service. By receiving the ESG model, the terminal acquires information inevitably required to receive the service the service provider offers. When the user selects a specified service, the terminal gets access to a data stream, transmitted so as to provide the service, by using the acquired information, and then receives data.

Hereinafter, preferred embodiments of the present invention are separately described. A first preferred embodiment of the present invention includes a process of forwarding a session after specifying role for the session, during which ESG data is carried, by use of a partition declaration; and a process of classifying the session into a main data session, a current data session, and a future data session after a terminal has checked the partition declaration. A second embodiment of the present invention includes a process of additionally defining a reconfiguration session for reporting a change when the change of items occurs including variation of channel information, an update of data, etc., aside from the above sessions; and a process of ascertaining the reconfiguration session to acquire updated data in advance, wherein the process of ascertaining is performed by the terminal.

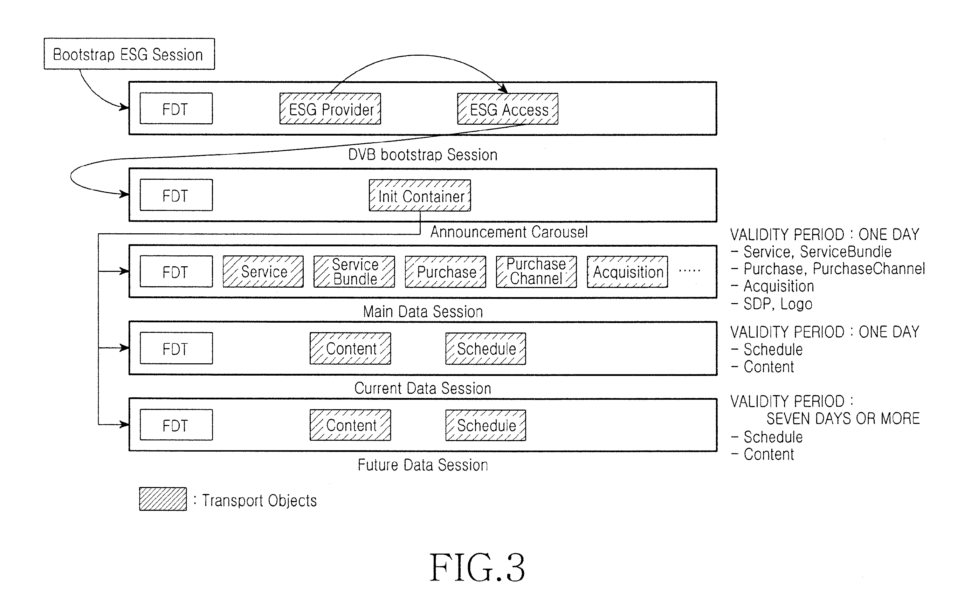

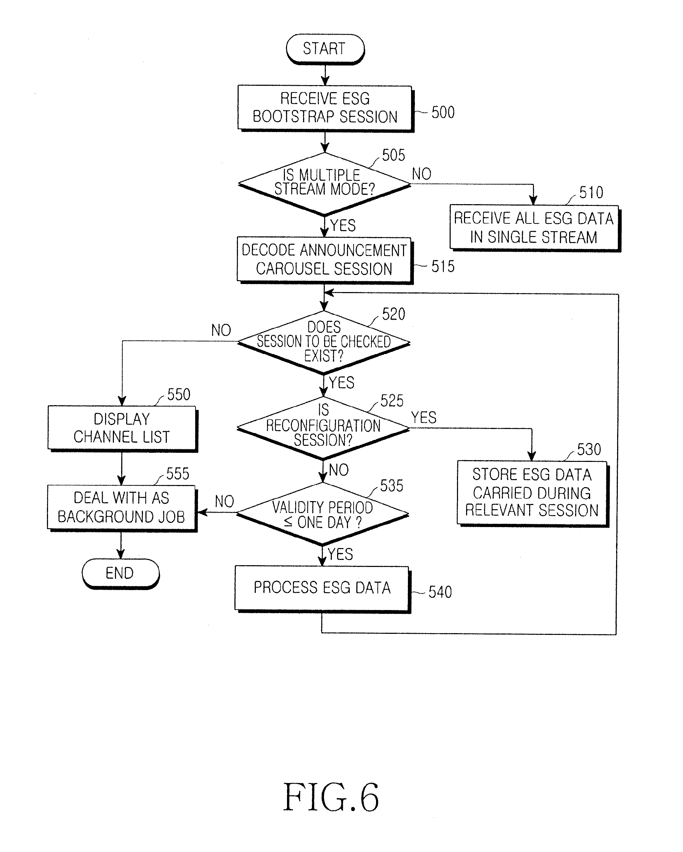

First, a scheme corresponding to this embodiment of the present invention will be described with reference to FIGS. 3 and 6, wherein the role of each session during which an actual ESG data is carried is specified and then forwarded. FIG. 3 illustrates a session which is divided into several sessions and then transferred by roles in accordance with the rules of ESG partitioning according to this embodiment of the invention.

As illustrated in FIG. 3, it is possible that the ESG data is forwarded in a multiple stream mode. In the multiple stream mode, information of each session is inserted in an init container inside an ESG announcement carousel, and then the inserted information is transmitted with the init container. In particular, the partition declaration includes information on a division reference by each session and on a channel of each session, when the ESG is transferred during multiple sessions. The index list and the index structure include fragments of the ESG to be forwarded, as well as information on mapping between containers. Accordingly, if the terminal confirms the partition declaration, it is now able to perceive the number of sessions to be transmitted, an IP address of each session, and information on ports.

As illustrated in FIG. 3, several sessions are classified into three sessions, for which roles are specified, and the actual ESG data is separately transmitted during the classified sessions. In this embodiment of the invention, the role of the session is classified into three sessions. That is, several sessions are classified into three sessions, such as a main data session, a current data session, and a future data session.

In order to classify the session as above, a structure of the partition declaration of standards of Digital Video Broadcasting-Handheld Computer Based Message System (DVB-H CBMS) has to be improved. In a method for efficiently classifying the ESG data and for transmitting the classified data, so as to provide the several sessions for which suitable roles are specified, in of the present invention a new field is defined in the partition declaration and positions of established fields are changed so that each session can be set to a specific value, as described below.. For this, a new field called session type is first defined. Accordingly, each session can be assigned a session type, and a method by which suitable types of field values can be set, is presented.

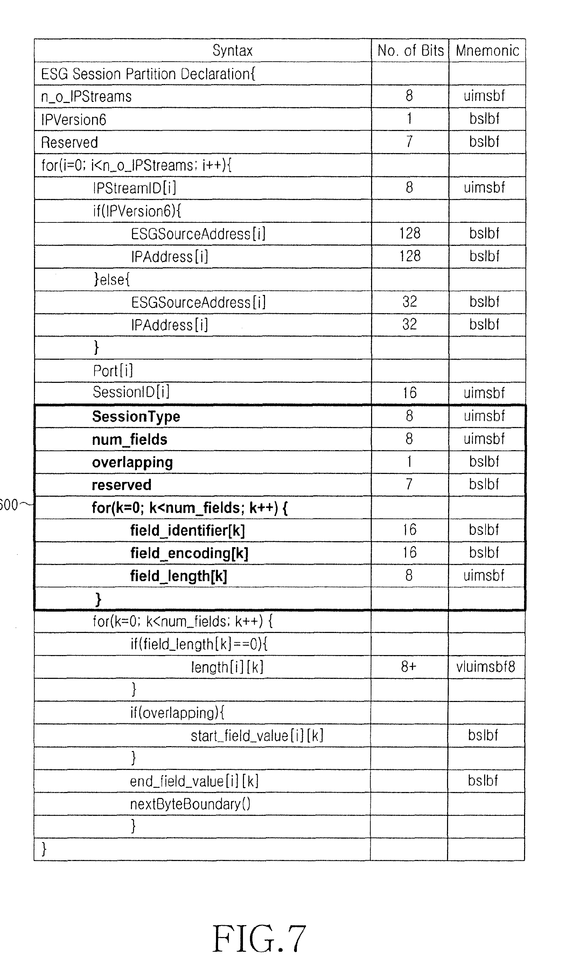

As described above, in order to distinguish between the roles of the sessions in the partition declaration, a part defined by the designation of reference numeral 600 in FIG. 7, is appended. The session type defining the role of each session in this part is set to a value for discriminating between the sessions. Hence, if the terminal checks out only the value of the session type, the terminal is now able to classify the session into the main data session, the current data session, and the future data session.

In the first place, during the main data session, information essentially required to provide a broadcasting service is carried, and important data which does not mainly change is included, e.g., service fragment, acquisition fragment, service bundle fragment, purchase fragment, and purchase channel fragment, etc.

A process of generating the main data session will be described in detail with reference to FIG. 7, which illustrates a syntax defined in the partition declaration according to the present invention.

In a main data session, session type is set to a value for reporting the main data session shown in FIG. 7, field_identifier is set to '0,' and field_encoding is set to '0 x 0101,' so that the validity period can be set. In particular, since essential data required to offer the broadcasting service is carried during the main data session, the validity period is set to a relatively short term (e.g., one day, etc.), and should be set to seven days or less. In addition, the main data session is set as a plural number as a situation demands, and then a plurality of sessions can be forwarded. For instance, in the generation of the main data session, while data essential to provide the broadcasting service may be carried during the main data session, only the minimum data needed to offer the broadcasting service is once carried during one main data session first of all, and then the remaining essential data can be carried during another main data session. As a result, the main data session can be created in a plural number, and then a plurality of sessions can be forwarded.

In a current data session, a value for reporting the current data session is set to a session type shown in FIG. 7. In the same manner as the main data session, a validity period can be set and forwarded in a plural number. Data (e.g., schedule fragment, content fragment, etc.) needed to provide a current service is carried during the current data session. Namely, data required to perform a service chosen by a user from among a variety of services, is carried. Herein, the validity period is set to a short term (e.g., 3 hours, 24 hours, etc.) as management policies of common carriers or broadcasters demand, and should be set to 7 days or less.

In a future data session, a value for giving notice of the future data session is set to the session type shown in FIG. 7, and data (e.g., schedule fragment, content fragment, etc.) required to provide service in the near future is carried. Herein, a validity period can be set to 7 days or more as management policies of common carriers or broadcasters demand, and can be set by using variables of start_field_value and end_field_value, which respectively signify the commencement of validity time and a termination of validity time. In addition, the future data session can be set in a plural number like the other sessions, can include data carried during the current data session, as policies of common carriers or broadcasters demand, and can otherwise include only the remaining data excepted from data carried during the current data session. Like this, because the data carried during the future data session is used merely as additional data on the side of the terminal, the data does not necessarily need to be received, and it can be preset whether the data is received in advance.

As described above, if several sessions are classified into various types according to their roles, it is possible that the validity period is set by each session. Accordingly, in the present invention, the validity period is set by using start_field_value and end_field_value by each session. If the validity period is set by each session, since it is possible that the terminal receives data whose validity period is long after the terminal has first received data whose validity period is short, the transmission of the ESG data can be efficiently achieved.

Meanwhile, because several sessions are classified into various types according to their roles, and the ESG data is separately transmitted during each classified session, the terminal first receives and analyzes the data essentially required to offer the broadcasting service, and is then able to deal with the remaining additional data as a background job. Therefore, as it is possible to display data on a screen with only necessary minimum data without waiting for the completion of reception of all ESG data, waiting time is considerably reduced, and can remarkably improve the quality of the services.

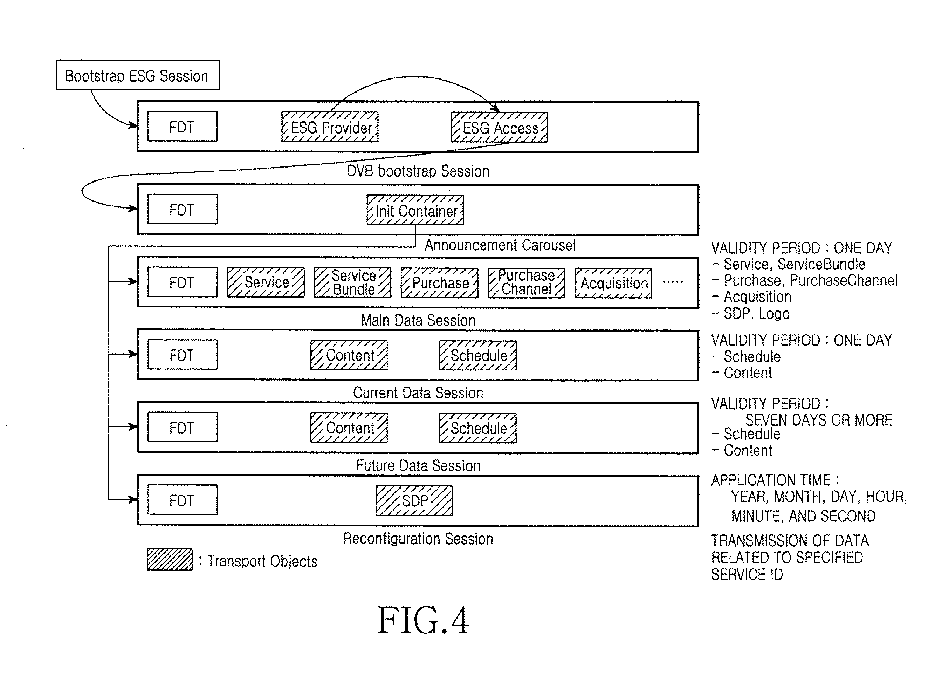

Hereinafter, a reconfiguration session in accordance with the rules of ESG partitioning according to another embodiment of the present invention will be described with reference to FIG. 4. To efficiently illustrate FIG. 4, reference is made to the syntax shown in FIG. 7.

When a change in important data needed to provide a DVB-H broadcasting service takes place, a scheme for minimizing a lowering of service quality caused by delay of an update of the terminal is presented. In this embodiment of the invention, when reconfiguration occurs, in order to give notice of the occurrence of the reconfiguration, a reconfiguration session during which only data required for the update is gathered and carried is additionally generated, so that the data is transmitted to the terminal during a created reconfiguration session.

A description of a process of generating the reconfiguration session is as follows.

During the reconfiguration session, important updated data created in the near time is carried, wherein a Service Discovery Protocol (SDP) file relevant to a specified channel and critical data (e.g., a schedule) needed for reproduction are carried. To generate the reconfiguration session, the session type shown in FIG. 7 is set to a value for reporting the reconfiguration session.

Service Uniform Resource Identifier (serviceURI) and a point of time for application of the reconfiguration in the partition declaration is defined in creating the reconfiguration session in the present invention. In other words, setting num_fields shown in FIG. 7 to '2' enables a process to store only data carried during the reconfiguration session for special use. Furthermore, so as to set serviceURI, a first field_identifier is set to '0x01,' and field_encoding is set to '0 x 0000,' so that stringtypes are specified for the field_identifier and the field_encoding. In addition, serviceURI list string using null value as a delimiter instead of denoting end validity time is inserted into end_field_value. At this time, the plural number may be specified for the serviceURI in accordance with the number of channel(s) in which information change(s).

Continuously, a second field_identifier is set to one (e.g., '0 x 02') of the values specified for "DVB reserved" in TABLE 8.2 of a document of ESG standards, and a set value is used for the second field identifier. In addition, field_encoding is set to '0 x 0400,' and a point of time applied to varied data has a form of datetime such as second, minute, hour, day, month, and year. Time applied to end_field_value is set to even units in seconds. On the one hand, information per serviceURI is assigned to one reconfiguration session, and can be transferred during the reconfiguration session. On the other hand, information related to a plurality of serviceURI is assigned to one reconfiguration session, and can be then transmitted during the reconfiguration session.

As described above, the classified sessions may be transferred according to the preferred embodiments of the present invention, the structure of the syntax in ESG partition declaration must be modified as illustrated in FIG. 7. Specially, a field defining the type of the session is appended so as to distinguish between the role of each session, and it is possible that the type of the session is specified for each session. Moreover, to improve such a problem that the same rules of partitioning have to be applied to all the sessions once values of num_field, overlapping, field_identifier, field_encoding, and field_length are determined, in the present invention, a part in which each session can be set to a specific value is inserted in the position designated by reference numeral 600 in FIG. 7. Because session type, which can assign a suitable role to each session, is appended before establishment of the rules of portioning, the terminal can easily discriminate between the roles of the sessions, and can provide a diversity of application services later on as well.

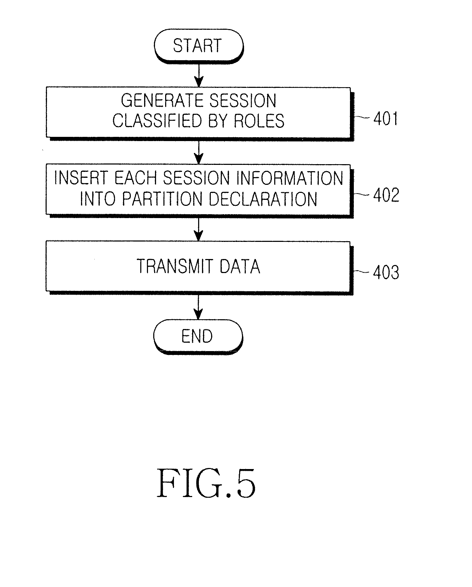

Referring to FIG. 5, a description is provided of an operation of creating and transferring sessions respectively assigned suitable roles according to a preferred embodiment of the present invention. With reference to FIG. 5, a service provider, in step 401, classifies a session into several sessions by suitable roles, and therefore creates the classified sessions assigned the suitable roles, respectively. In more detail, the service provider classifies data into essential data required to provide a broadcasting service to be forwarded, data needed to offer a current broadcasting service, and data necessary to provide an additional service in the near future, and therefore generates a main data session, a current data session, and a future data session, during which corresponding data is respectively carried. Furthermore, according to a preferred embodiment of the present invention, if a situation where reconfiguration is required takes place, the service provider produces a reconfiguration session during which data needed for the reconfiguration is carried. If each session is created in this way, the service provider, in step 402, inserts information on the sessions causing ability for discrimination between the roles of the sessions into partition declaration. Going through the procedure in this manner, the service provider, in step 403, brings ESG data to completion to transmit to a terminal.

Hereinafter, an operation of the terminal for receiving the ESG data will be described with reference to FIG. 6, which is a flowchart illustrating the operation of the terminal by a new rule of a partition declaration according to a preferred embodiment of the present invention. The terminal analyzes the partition declaration in terms of the syntax shown in FIG. 7.

As illustrated in FIG. 6, if a broadcasting service is rendered to a viewer (i.e., a user), the terminal receives an ESG bootstrap session in step 500. Upon receiving the ESG bootstrap session, the terminal analyzes the ESG bootstrap session, and in step 505, determines if a present transmission mode is a multiple stream mode or a single stream mode. If the present transmission mode is not the multiple stream mode, in step 510, the terminal determines that the present transmission mode is the single stream mode, searches for a pertinent session, and receives all the ESG data. Otherwise, in the multiple stream mode, in step 515, the terminal decodes an announcement carousel. In particular, the beginning of an ESG data transmission starts on receiving the ESG bootstrap session, the ESG bootstrap session includes an ESG provider descriptor and an ESG access descriptor. The ESG access descriptor possesses information during an announcement carousel session. When the terminal searches for the announcement carousel session to receive an init container, it can detect information on a partition declaration in the init container. In the present invention, by using the information on the partition declaration, the terminal can detect the role of each session during which the actual ESG data is transmitted.

As described above, if the terminal decodes the announcement carousel session, the terminal can acquire information on each session from the partition declaration. Accordingly, in step 520, the terminal determines if a session to be checked exists, and searches for each session. Namely, once the terminal locates the main data session and the current data session on the basis of validity period detected by analyzing the information on the partition declaration, the terminal receives the ESG data. In a future data session, the terminal determines the reception of the pertinent ESG data by determining if it receives the future data session. While seeking each session, the terminal, in step 525, determines if a reconfiguration session exists. If the reconfiguration session exists, the terminal proceeds to step 530, and stores ESG data carried during the relevant reconfiguration session. Namely, the terminal previously stores updated data in order to apply the updated data to a preset point of time of reconfiguration application. The point of time of reconfiguration application is transferred along with the updated data during the reconfiguration session.

Otherwise, if the located session is not the reconfiguration session, the terminal, in step 535, determines if the validity period signifies one day or less. If so, the terminal, in step 540, receives the ESG data carried during the session, processes the received data, and returns back to step 520. The session having the validity period of one day or less corresponds to the main data session during which essential data needed to offer the broadcasting service is carried, or signifies the current data session during which data required to provide a service selected by the user is carried. If the session is determined to have a validity period of more than one day in step 535, the terminal regards the session as the future data session, and proceeds to step 555 to deal with the session as a background job. To antedate start time of the DVB-H broadcasting service as soon as possible, namely, to minimize waiting time for which the user waits until the broadcasting service starts, the terminal deals with the session as a background job in a case of the reception of data carried during the future data session. Going through the procedure in the way, if no more sessions exist to be checked in step 520, the terminal proceeds to step 550 to display a channel list on the basis of the ESG data received during the main data session and during the current data session, and deals with the future data session as a background job, as in step 555.

As described above, according to the present invention, with the application of the rules of partitioning which is efficient during the transmission of the ESG data in the DVB-H broadcasting service, the effectiveness of a data receiving scheme of the terminal is greatly improved. Moreover, because reconfiguration information is provided in advance even though important information of a channel on which viewers are watching a program changes, the improvement of service quality can be promoted while minimizing interruption of the service. Specially, since a restriction of expansion is settled in standards of a CBMS (Computer Based Message System) ESG session partition declaration in the present invention, a diversity of functions utilizing the rules of partitioning in a multiple session mode can be provided afterwards.

While the invention has been shown and described with reference to certain preferred embodiments thereof, it will be understood by those skilled in the art that various changes in form and details may be made therein without departing from the scope of the invention. Therefore, the scope of the present invention is not restricted to the described embodiments but defined by the appended claims.

## Claims

1. A method for optimizing the transmission of electronic service guide, ESG, data in a Digital Video Broadcasting-Handheld, DVB-H, system, the method comprising the steps of:
(1) transmitting the ESG data, in which a session type denoting a role of each session by ESG data sessions is set, from a DVB-H service provider to a terminal;
(2) detecting by the terminal each session type set in the ESG data; and
(3) discriminating between the ESG data sessions based on the detected session type, and classifying the ESG data sessions according to the types thereof by the terminal.

2. The method as claimed in claim 1 or 2, wherein the session type is set in an area defining information related to the ESG data session.

3. The method as claimed in one of claims 1 or 2, wherein step (2) comprises:
receiving an ESG bootstrap session and decoding the received ESG bootstrap session;
perceiving a position of an ESG announcement carousel session from the ESG bootstrap session if a decoding result denotes an ESG multiple stream mode;
checking a partition declaration included in an init container during the ESG announcement carousel session in the perceived position; and
sensing each set session type in the partition declaration.

4. The method as claimed in one of claims 1 to 3, wherein step (3) comprises the steps of:
perceiving a position of an ESG data session for which a main data session is specified if the detected session type is set corresponding to the main data session; and
acquiring essential data needed to perform a DVB-H broadcasting service during the ESG data session having the perceived position.

5. The method as claimed in claim 4, wherein the essential data comprises service fragment data, acquisition fragment data, service bundle fragment data, purchase fragment data, and purchase channel fragment data.

6. The method as claimed in one of claims 1 to 3, wherein step (3) comprises:
perceiving a position of an ESG data session for which a current data session is specified if the detected session type is set corresponding to the current data session; and
acquiring necessary data required to perform a DVB-H broadcasting service selected by a user during the ESG data session having the perceived position.

7. The method as claimed in claim 6, wherein the necessary data comprises schedule fragment data and content fragment data.

8. The method as claimed in one of claims 1 to 3, wherein step (3) comprises:
perceiving a position of an ESG data session for which a future data session is specified if the detected session type is set corresponding to the future data session; and
acquiring processed additional data by processing additional data as a background job, wherein the additional data is required to provide a DVB-H broadcasting service and is carried during the ESG data session having the perceived position.

9. The method as claimed in one of claims 1 to 8, wherein a validity period of each ESG data session is set by the ESG data sessions during which the ESG data is transmitted to the terminal.

10. The method as claimed in claim 9, further comprising:
perceiving by the terminal the validity period assigned to the ESG data; and
distinguishing between the ESG data sessions based on the perceived validity periods, and classifying the ESG data sessions according to the types thereof by the terminal.

11. The method as claimed in claim 10, wherein an ESG data session having a short validity period is dealt with first, by the terminal.

12. The method as claimed in one of claims 1 to 3, wherein step (3) comprises discriminating an ESG data session for which a reconfiguration session is specified from other sessions, and classifying the ESG data session as the reconfiguration session, if the detected session type is set corresponding to a reconfiguration session.

13. The method as claimed in claim 12, wherein the reconfiguration session has a partition declaration in which a service channel having variation of information and a point of time of reconfiguration application are set.

14. The method as claimed in claim 12 or 13, further comprising:
acquiring updated data needed for reconfiguration during the reconfiguration session, and storing the acquired data; and
applying the stored data to a point of time of reconfiguration application assigned to the reconfiguration session.

15. A system for optimizing transmission of electronic service guide, ESG, data in a Digital Video Broadcasting-Handheld, DVB-H, system, the system comprising:
a DVB-H service provider transmitting to a terminal the ESG data in which a session type denoting a role of each session by ESG data sessions is set; and
the terminal for detecting each session type set in the ESG data, for discriminating between the ESG data sessions based on the detected session type, and for classifying the ESG data sessions by the types thereof.

16. The system as claimed in claim 15, wherein the session type is set in an area defining information related to the ESG data session.

17. The system as claimed in claim 15 or 16, wherein the terminal receives an ESG bootstrap session to decode the received ESG bootstrap session, perceives a position of an ESG announcement carousel session from the ESG bootstrap session if a result of the decoding denotes an ESG multiple stream mode, checks a partition declaration included in an init container during the ESG announcement carousel session in the perceived position, and senses each set session type in the partition declaration.

18. The system as claimed in claim 15 or 16, wherein the terminal perceives a position of an ESG data session for which a main data session is specified if the detected session type is set corresponding to the main data session, and acquires essential data needed to perform a DVB-H broadcasting service during the ESG data session having the perceived position.

19. The system as claimed in claim 18, wherein the essential data comprises service fragment data, acquisition fragment data, service bundle fragment data, purchase fragment data, and purchase channel fragment data.

20. The system as claimed in claim 15 or 16, wherein the terminal perceives a position of an ESG data session for which a current data session is specified if the detected session type is set corresponding to the current data session, and acquires necessary data required to perform a DVB-H broadcasting service selected by a user during the ESG data session having the perceived position.

21. The system as claimed in claim 20, wherein the necessary data comprises schedule fragment data and content fragment data.

22. The system as claimed in claim 15 or 16, wherein the terminal perceives a position of an ESG data session for which a future data session is specified if the detected session type is set corresponding to the future data session, and acquires processed additional data by processing additional data as a background job, wherein the additional data is required to provide a DVB-H broadcasting service and is carried during the ESG data session having the perceived position.

23. The system as claimed in claim 15 or 16, wherein the DVB-H service provider transmits to the terminal the ESG data which is correspondingly carried during each ESG data session whose validity period is set by the ESG data sessions.

24. The system as claimed in claim 23, wherein the terminal perceives the validity period assigned to the ESG data, distinguishes between the ESG data sessions on the basis of the perceived validity periods, and classifies the ESG data sessions by the types thereof.

25. The system as claimed in claim 24, wherein an ESG data session having a short validity period is dealt with first by the terminal.

26. The system as claimed in one of claims 15 to 25, wherein the terminal discriminates an ESG data session for which a reconfiguration session is specified from other sessions to classify the ESG data session as the reconfiguration session if the detected session type is set corresponding to the reconfiguration session, acquires updated data needed to reconfiguration during the reconfiguration session to store the acquired data, and applies the stored data to a point of time of reconfiguration application assigned to the reconfiguration session.
